# EUROPEAN PATENT APPLICATION

(11) **EP 4 142 180 A1**
(43) Date of publication of application: **01.03.2023**
(21) Application number: 21812431.1
(22) Date of filing: 29.04.2021
(51) Int. Cl.: H04B 7/185, H04W 76/10

(54) **METHOD AND APPARATUS FOR INSTRUCTING BASE STATION TO ESTABLISH CONNECTION WITH GATEWAY STATIONS, AND COMPUTING DEVICE**

(30) Priority: 27.05.2020 CN 202010463487
(71) Applicant: Huawei Technologies Co., Ltd., Longgang District, Shenzhen, Guangdong 518129 (CN)
(72) Inventor: WANG, Yu, Shenzhen, Guangdong 518129 (CN); QIAO, Yunfei, Shenzhen, Guangdong 518129 (CN); ZHOU, Jianwei, Shenzhen, Guangdong 518129 (CN)
(74) Representative: Huawei European IPR
(86) International application number: PCT/CN2021/091167
(87) International publication number: WO 2021/238574

(57) **Abstract**

Embodiments of the present invention disclose a method, an apparatus, and a computing device for indicating a base station to establish a connection to a gateway station and belong to the field of communications technologies. The method includes: obtaining ephemeris information of a target communications satellite corresponding to a target base station and location information of a plurality of gateway stations corresponding to the target communications satellite; determining, based on the ephemeris information of the target communications satellite and the location information of the plurality of gateway stations, a time period of effective communication between each gateway station and the target communications satellite in a period of relative movement between the target communications satellite and the Earth; determining some target gateway stations from the plurality of gateway stations based on the effective communication time periods of the plurality of gateway stations and the relative movement period, where a union time period of the effective communication time periods of the target gateway stations can cover the entire relative movement period; and indicating the target base station to establish a connection to each target gateway station. In this application, construction costs of the satellite communications network can be reduced.

## Description

This application claims priority to Chinese Patent Application No. 202010463487.2, filed on May 27, 2020 and entitled "METHOD, APPARATUS, AND COMPUTING DEVICE FOR INDICATING BASE STATION TO ESTABLISH CONNECTION TO GATEWAY STATION", which is incorporated herein by reference in its entirety.

### TECHNICAL FIELD

This application relates to the field of communications technologies, and in particular, to a method, an apparatus, and a computing device for indicating a base station to establish a connection to a gateway station.

### BACKGROUND

With development of communications technologies, a non-terrestrial communications network (Non-Terrestrial Network, NTN), that is, a satellite communications network, has significant advantages such as global coverage, long-distance transmission, flexible networking, convenient deployment, and no geographical condition limitation, and therefore is widely used in a plurality of fields such as maritime communication, positioning and navigation, risk resistance and disaster relief, scientific experiment, video broadcast, and Earth observation.

An existing satellite communications network may include a communications satellite, a gateway station, a 5G NodeB (5G NodeB, gNB), a user terminal (User Equipment, UE), and the like. A connection may be established between the communications satellite and the gNB by using the gateway station. The communications satellite broadcasts system information of a cell corresponding to the gNB, and the UE establishes a connection to the communications satellite by searching for the system information of the cell, so that data can be transmitted between the UE and the gNB.

In an implementation process of this application, the inventor finds that a related technology has at least the following problems:

Due to movement of the communications satellite and rotation of the Earth, the gateway station distributed on the ground is not always visible to the communications satellite, that is, the gateway station does not always fall within signal coverage of the communications satellite. Therefore, the communications satellite establishes a connection to different gateway station on the ground in different time periods. To ensure normal running of the satellite communications network, when the satellite communications network is constructed, the gNB needs to establish a connection to all gateway stations on the ground. However, construction costs of the satellite communications network increase.

### SUMMARY

Embodiments of this application provide a method, an apparatus, and a computing device for indicating a base station to establish a connection to a gateway station, to indicate a base station to establish a connection to a gateway station.

According to a first aspect, this application provides a method for indicating a base station to establish a connection to a gateway station. The method includes: obtaining ephemeris information of a target communications satellite corresponding to a target base station and location information of a plurality of gateway stations corresponding to the target communications satellite; determining, based on the ephemeris information of the target communications satellite and the location information of the plurality of gateway stations, a time period of effective communication between each gateway station and the target communications satellite in a period of relative movement between the target communications satellite and the Earth; determining some target gateway stations from the plurality of gateway stations based on the effective communication time periods of the plurality of gateway stations and the relative movement period, where a union time period of the effective communication time periods of the target gateway stations can cover the entire relative movement period; and indicating the target base station to establish a connection to each target gateway station.

The solution shown in this embodiment of the present invention may be applied in a process of constructing a satellite communications network. The satellite communications network includes a communications satellite, a gateway station, a gNB, UE, and the like. The gNB is connected to a plurality of gateway stations. The communications satellite is connected to different gateway stations in different time periods, and broadcasts system information of a cell corresponding to the gNB. The UE implements satellite communication by receiving the system information of the cell corresponding to the gNB. Specifically, a skilled person may precisely calculate, based on ephemeris information, running statuses such as locations and speeds of the communications satellite at different moments. Then location information of each gateway station in a satellite communications system is obtained, where the location information may be a latitude and longitude of each gateway station. Further, a time period (that is, an effective time period) in which each gateway station can communicate with a target communications satellite in a period of relative movement between the target communications satellite and the Earth is determined based on the locations of the communications satellite at different moments and the location information of each gateway station. Relative locations of the target communications satellite and each gateway station are the same at a same corresponding moment in a plurality of relative movement periods. Then, some target gateway stations may be determined from a plurality of gateway stations based on the effective communication time period of each gateway station and the relative movement period, where a union of the effective communication time periods of gateway stations in some target gateway stations can cover the entire relative movement period. Finally, it may be set that a target base station establishes a connection to each target gateway station. In this way, costs of a connection between the gNB and the gateway station are reduced while normal communication of the satellite communications network is ensured, and a quantity of times of switching a feeder link between a satellite and the gateway station is reduced.

In a possible implementation, duration of the relative movement period is a least common multiple of duration of a rotation period of the Earth and duration of a movement period of the target communications satellite.

In the solution shown in this embodiment of the present invention, a common multiple or a least common multiple of duration (the movement period of the target communications satellite) during which the target communications satellite flies around the Earth one cycle and the duration of the rotation period of the Earth may be determined as the period of relative movement between the target communications satellite and the Earth. In this way, relative locations of the target communications satellite and each gateway station are the same at any same moment in each relative movement period.

In a possible implementation, the determining, based on the ephemeris information of the target communications satellite and the location information of the plurality of gateway stations, a time period of effective communication between each gateway station and the target communications satellite in a period of relative movement between the target communications satellite and the Earth includes: determining, based on the ephemeris information of the target communications satellite and the location information of the plurality of gateway stations, a time period in which each gateway station is visible to the target communications satellite in the period of relative movement between the target communications satellite and the Earth; and determining, based on the visible time period corresponding to each gateway station, the effective communication time period corresponding to the gateway station, where duration of the effective communication time period corresponding to each gateway station is shorter than duration of the visible time period.

In the solution shown in this embodiment of the present invention, before the time period of effective communication between each gateway station and the target communications satellite in the relative movement period is determined, the time period in which each gateway station is visible to the target communications satellite may be first determined. The visible time period of the gateway station is a time period in which the gateway station falls within coverage of a broadcast signal of the target communications satellite. Locations of the target communications satellite at different moments may be calculated by using the ephemeris information, and then the visible time period of each gateway station is calculated based on the location information of each gateway station and a coverage area of the broadcast signal of the target communications satellite. The effective communication time period is a time period in which the target communications satellite and the gateway station can communicate normally, and a start time point and an end time point of the effective communication time period of the gateway station falls within the visible time period. In this way, a corresponding effective communication time period may be determined based on a visible time period obtained through calculation.

In a possible implementation, the determining some target gateway stations from the plurality of gateway stations based on the effective communication time periods of the plurality of gateway stations and the relative movement period includes: determining a plurality of connection time periods obtained through division in the relative movement period, and determining some target gateway stations from the plurality of gateway stations based on the plurality of connection time periods, the effective communication time periods of the plurality of gateway stations, and the relative movement periods.

In the solution shown in this embodiment of the present invention, in a process of determining a target gateway station, the period of relative movement between the target communications satellite and the Earth may be divided into a plurality of connection time periods in advance. Some target gateway stations that establish a connection to the gNB are determined by using the effective communication time period of each gateway station and the plurality of connection time periods obtained by dividing the relative movement period. In each connection time period, the target communications satellite establishes a connection to only a corresponding target gateway station.

In a possible implementation, the determining some target gateway stations from the plurality of gateway stations based on the plurality of connection time periods, the effective communication time periods of the plurality of gateway stations, and the relative movement periods includes: determining, based on the plurality of connection time periods and the effective communication time periods of the plurality of gateway stations, a connection time period corresponding to each gateway station, where the connection time period corresponding to each gateway station falls within a range of a corresponding effective communication time period; establishing a directed graph by using the connection time period corresponding to each gateway station as a vertex, where in the directed graph, if connection time periods corresponding to any two first vertices are adjacent to each other in time and correspond to a same gateway station, a weight of an edge between the two first vertices is a first value; and if connection time periods corresponding to any two second vertices are adjacent to each other in time and correspond to different gateway stations, a weight of an edge between the two second vertices is a second value, where the first value is less than the second value; determining a shortest path in the directed graph based on a shortest path algorithm; and determining a target gateway station corresponding to a vertex on the shortest path.

In the solution shown in this embodiment of the present invention, a skilled person may determine, based on the effective communication time period or the visible time period of each gateway station, the connection time period corresponding to the gateway station, where each gateway station may correspond to a plurality of connection time periods; and then establish a directed graph based on start time and end time of each connection time period by using the connection time period corresponding to each gateway station as a vertex. If connection time periods of two adjacent vertices correspond to a same gateway station, a weight of an edge between the two adjacent vertices may be set to the first value; or if connection time periods of two adjacent vertices correspond to different gateway stations, a weight of an edge between the two adjacent vertices may be set to the second value, where the first value is less than the second value. Further, at least one shortest path is determined based on the shortest path algorithm. In this way, a quantity of target gateway stations corresponding to a vertex on the shortest path determined by using the shortest path algorithm is smallest.

In a possible implementation, after the target gateway station is determined, a total connection time period corresponding to each target gateway station is determined based on the connection time period corresponding to the target gateway station; time for switching a feeder link between a communications satellite and each target gateway station is determined based on the total connection time period corresponding to the target gateway station; and interruption indication information is determined based on time for switching a feeder link between the target communications satellite and each target gateway station and a connection manner between the target communications satellite and the target base station, where the interruption indication information includes an interruption type and an interruption time period, and the interruption indication information is sent by the target gateway station to a user terminal to indicate, to the user terminal, an interruption type and an interruption time period of signal interruption generated due to switching of the feeder link between the target communications satellite and the target gateway station.

In the solution shown in this embodiment of the present invention, the target communications satellite may need to establish a connection to different gateway stations in different connection time periods. In this case, a feeder link between the target communications satellite and a gateway station may be switched at an end time point or a start time point of each connection time period, that is, the target communications satellite is disconnected from a currently connected gateway station and establishes a connection to a next to-be-connected gateway station. Therefore, the total connection time period corresponding to each target gateway station may be determined based on the connection time period corresponding to the target gateway station. A start time point or an end time point of the total connection time period corresponding to each target gateway station is a time point at which the target communications satellite switches a feeder link. To prevent data transmission of the UE from being interrupted due to feeder link switching performed by the target communications satellite, the target communications satellite may send the interruption indication information to the UE before switching the feeder link. The interruption indication information includes a start time point and an end time point, the interruption start time point is the start time point and the end time point of the total connection time period corresponding to each target gateway station, and the end time point may be set by a skilled person based on the interruption start time point. An interruption type may be determined based on a connection between the gNB and the target communications satellite, and includes that both uplink transmission and downlink transmission are interrupted and that downlink transmission is interrupted but uplink transmission is not interrupted. In this way, the target communications satellite may send the interruption indication information to the UE in advance before switching the feeder link, to prevent data transmission of the UE from being interrupted due to feeder link switching performed by the target communications satellite.

According to a second aspect, an apparatus for indicating a base station to establish a connection to a gateway station is provided. The apparatus includes: an obtaining module, configured to obtain ephemeris information of a target communications satellite corresponding to a target base station and location information of a plurality of gateway stations corresponding to the target communications satellite; a determining module, configured to: determine, based on the ephemeris information of the target communications satellite and the location information of the plurality of gateway stations, a time period of effective communication between each gateway station and the target communications satellite in a period of relative movement between the target communications satellite and the Earth; and determine some target gateway stations from the plurality of gateway stations based on the effective communication time periods of the plurality of gateway stations and the relative movement period, where a union time period of the effective communication time periods of the target gateway stations can cover the entire relative movement period; and an indication module, configured to indicate the target base station to establish a connection to each target gateway station.

In a possible implementation, duration of the relative movement period is a least common multiple of duration of a rotation period of the Earth and duration of a movement period of the target communications satellite.

In a possible implementation, the determining module is configured to: determine, based on the ephemeris information of the target communications satellite and the location information of the plurality of gateway stations, a time period in which each gateway station is visible to the target communications satellite in the period of relative movement between the target communications satellite and the Earth; and determine, based on the visible time period corresponding to each gateway station, the effective communication time period corresponding to the gateway station, where duration of the effective communication time period corresponding to each gateway station is shorter than duration of the visible time period.

In a possible implementation, the determining module is configured to: determine a plurality of connection time periods obtained through division in the relative movement period; and determine some target gateway stations from the plurality of gateway station based on the plurality of connection time periods, the effective communication time periods of the plurality of gateway stations, and the relative movement period.

In a possible implementation, the determining module is configured to:
determine, based on the plurality of connection time periods and the effective communication time periods of the plurality of gateway stations, a connection time period corresponding to each gateway station, where the connection time period corresponding to each gateway station falls within a range of a corresponding effective communication time period; establish a directed graph by using the connection time period corresponding to each gateway station as a vertex, where in the directed graph, if connection time periods corresponding to any two first vertices are adjacent to each other in time and correspond to a same gateway station, a weight of an edge between the two first vertices is a first value; and if connection time periods corresponding to any two second vertices are adjacent to each other in time and correspond to different gateway stations, a weight of an edge between the two second vertices is a second value, where the first value is less than the second value; determine a shortest path in the directed graph based on a shortest path algorithm; and determine a target gateway station corresponding to a vertex on the shortest path.

In a possible implementation, the indication module is further configured to: determine, based on the connection time period corresponding to each target gateway station, a total connection time period corresponding to the target gateway station; determine, based on the total connection time period corresponding to each target gateway station, time for switching a feeder link between a communications satellite and the target gateway station; and determine interruption indication information based on time for switching a feeder link between the target communications satellite and each target gateway station and a connection manner between the target communications satellite and the target base station, where the interruption indication information includes an interruption type and an interruption time period, and the interruption indication information is sent by the target gateway station to a user terminal to indicate, to the user terminal, an interruption type and an interruption time period of signal interruption generated due to switching of the feeder link between the target communications satellite and the target gateway station.

According to a third aspect, a computing device for indicating a base station to establish a connection to a gateway station is provided, where the computing device includes a processor and a memory. The memory stores computer instructions, and the processor executes the computer instructions to implement the method in the first aspect and the possible implementations of the first aspect.

According to a fourth aspect, a computer-readable storage medium is provided, where the computer-readable storage medium stores computer instructions. When the computer instructions in the computer-readable storage medium are executed by a computing device, the computing device is enabled to perform the method in the first aspect and the possible implementations of the first aspect, or the computing device is enabled to implement a function of the apparatus in the second aspect and the possible implementation of the second aspect.

According to a fifth aspect, a computer program product including instructions is provided. When the computer program product is run on a computing device, the computing device is enabled to perform the method in the first aspect and the possible implementations of the first aspect, or the computing device is enabled to implement a function of the apparatus in the second aspect and the possible implementations of the second aspect.

Beneficial effects brought by the technical solutions provided in the embodiments of the present invention are as follows:

The location information of the plurality of gateway stations and the ephemeris information of the target communications satellite are obtained to determine the time period of effective communication between each gateway station and the target communications satellite. Then, the period of relative movement between the target communications satellite and the Earth is set, and the effective communication time period corresponding to each gateway station is predicted based on the relative movement period. Some target gateway stations are determined from the plurality of gateway stations in the satellite communications network. Finally, the gNB is indicated to establish a connection to the target gateway station. In this application, the gNB is indicated to establish a connection to some target gateway stations in a plurality of gateway stations, so that construction costs of the satellite communications network can be reduced while normal running of the satellite communications network is ensured.

### DESCRIPTION OF DRAWINGS

FIG. 1 is a schematic diagram of an implementation environment according to an example embodiment of this application;
FIG. 2 is a diagram of a system architecture according to an example embodiment of this application;
FIG. 3 is a flowchart of a method for indicating a base station to establish a connection to a gateway station according to an example embodiment of this application;
FIG. 4 is a schematic diagram of a method for indicating a base station to establish a connection to a gateway station according to an example embodiment of this application;
FIG. 5 is a schematic diagram of a structure of an apparatus for indicating a base station to establish a connection to a gateway station according to an example embodiment of this application; and
FIG. 6 is a schematic diagram of a structure of a computing device according to an example embodiment of this application.

### DESCRIPTION OF EMBODIMENTS

To make objectives, technical solutions, and advantages of this application clearer, the following further describes implementations of this application in detail with reference to the accompanying drawings.

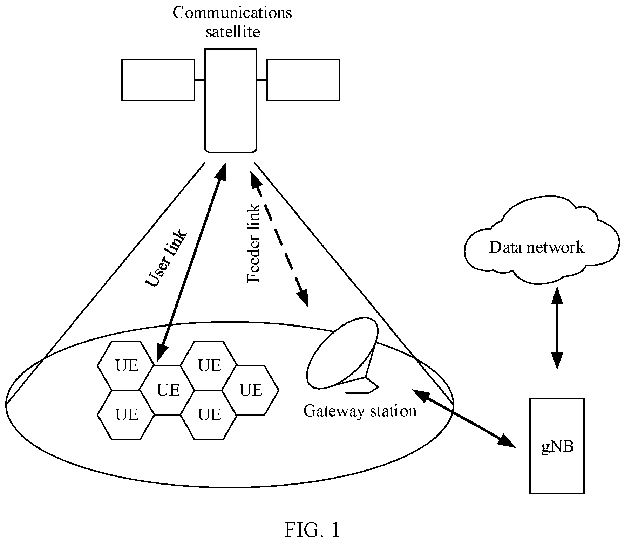

Embodiments of the present invention provide a method for indicating a base station to establish a connection to a gateway station, which may be applied in a process of establishing a satellite communications network. The satellite communications network is a type of non-terrestrial communications network, and has significant advantages such as global coverage, long-distance transmission, flexible networking, convenient deployment, and no geographical condition limitation, so that a user terminal can be directly connected to a communications satellite to transmit data. The satellite communications network may include devices such as a communications satellite, a gateway station, a gNB, and UE. FIG. 1 is a schematic diagram of an implementation environment according to an embodiment of this application. The communications satellite may be a transparent transmission satellite, and is responsible for forwarding data between the UE and the gNB/gateway station in the satellite communications network. The gNB may access a core network, and establishes a wired connection to the gateway station in the satellite communications network, for example, the gNB and the gateway station are connected by using an optical fiber. The gateway station is further connected to the communications satellite to construct the satellite communications network. After the satellite communications network is constructed, the communications satellite may broadcast system information of a cell corresponding to the gNB. The UE establishes a connection to the communications satellite by searching for the system information of the cell, so that data can be transmitted between the UE and the gNB. In the satellite communications network, one communications satellite may correspond to a plurality of gateway stations, and the plurality of gateway stations may establish a connection to a same gNB or may establish a connection to a plurality of gNBs.

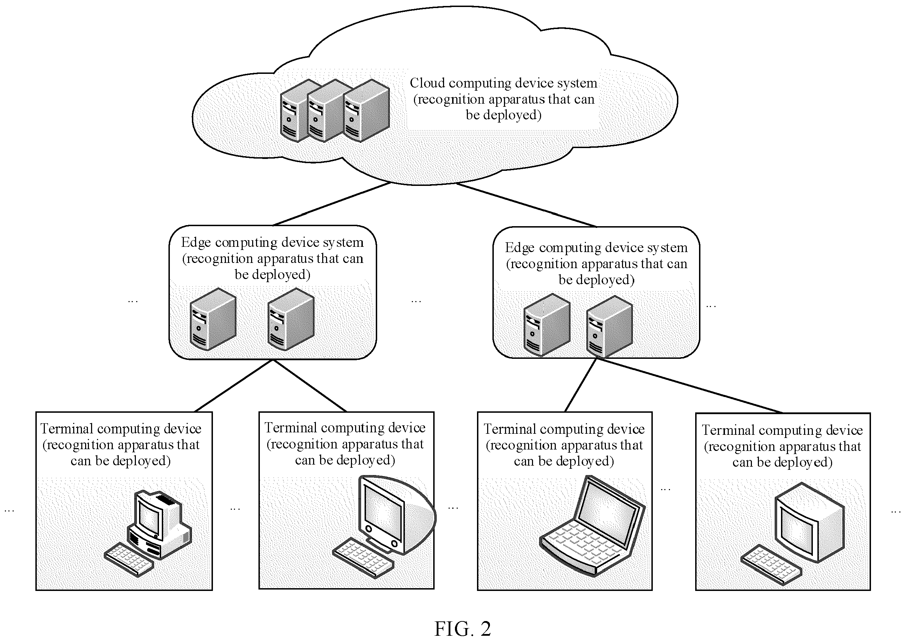

In the method for indicating a base station to establish a connection to a gateway station provided in the embodiments of this application, some gateway stations can be selected from a plurality of gateway stations corresponding to a communications satellite, to indicate a gNB to establish a satellite communications network with some gateway stations. The method for indicating a base station to establish a connection to a gateway station may be performed by an apparatus for indicating a base station to establish a connection to a gateway station (which may be referred to as an indication apparatus subsequently). The indication apparatus may be a hardware apparatus such as a server or a terminal computing device, or may be a software apparatus (such as a software program running on a hardware apparatus). For example, as shown in FIG. 2, the indication apparatus may run in a cloud computing device system (which may include at least one cloud computing device, such as a server), or may run in edge computing device system (which may include at least one edge computing device, such as a server or a desktop computer), or may run on various terminal computing devices (such as a notebook computer or a personal desktop computer).

Logically, the indication apparatus may alternatively be an apparatus including various parts. For example, the indication apparatus may include an obtaining module, a determining module, and an indication module. The components in the indication apparatus may be separately deployed in different systems or servers. The parts of the indication apparatus may separately run in any two of a cloud computing device system, an edge computing device system, and a terminal computing device. The cloud computing device system, the edge computing device system, and the terminal computing device are connected by using a communications path, and may communicate with and transmit data to each other.

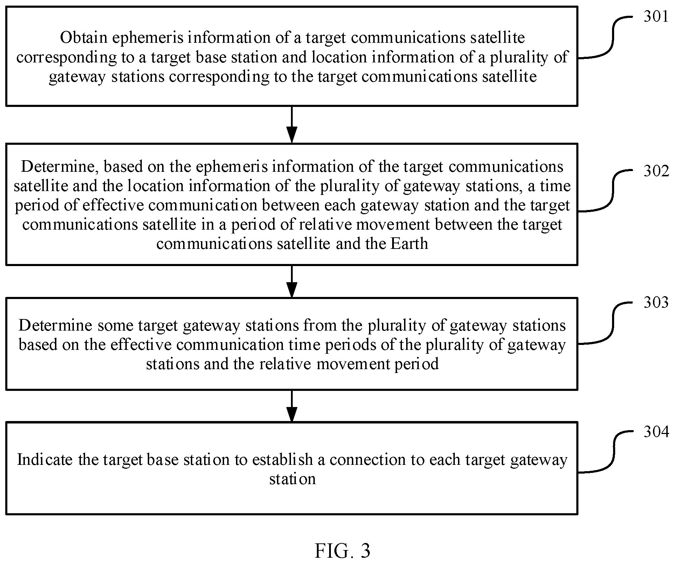

A method for indicating a base station to establish a connection to a gateway station provided in an embodiment of this application is described below with reference to FIG. 3. The method may be performed by an indication apparatus. Referring to FIG. 3, a processing procedure of the method is as follows.

Step 301: Obtain ephemeris information of a target communications satellite corresponding to a target base station and location information of a plurality of gateway stations corresponding to the target communications satellite.

In a satellite communications network, gateway stations are distributed in various regions and countries on the Earth. A plurality of gateway stations may establish a connection to a same base station, and the base station may be referred to as a target base station. A communications satellite that forms a satellite communications network with the target base station and the plurality of gateway stations is a communications satellite corresponding to the target base station. Each satellite has ephemeris information, which may also be referred to as a satellite ephemeris. The satellite ephemeris determines various parameters such as time, coordinates, a direction, and a speed of a flying body by using a mathematical relationship between six orbital parameters in the Kepler's law, and has extremely high precision. A skilled person may precisely calculate running statuses such as flying time, a flying location, and a flying speed of the target communications satellite by using an ephemeris of the target communications satellite, that is, flying locations corresponding to the target communications satellite at different moments may be obtained. The skilled person may further obtain location information of the plurality of gateway stations in the satellite communications network, where the location information may be a longitude and latitude of each gateway station.

Step 302: Determine, based on the ephemeris information of the target communications satellite and the location information of the plurality of gateway stations, a time period of effective communication between each gateway station and the target communications satellite in a period of relative movement between the target communications satellite and the Earth.

In implementation, after obtaining the location information of each gateway station in the satellite communications network and the flying locations corresponding to the target communications satellite at different moments, a skilled person may calculate, based on the location information of each gateway station and the flying locations of the target communications satellite at the moments, the time period of effective communication between each gateway station and the target communications satellite in the period of relative movement between the target communications satellite and the Earth.

Duration of the period of relative movement between the target communications satellite and the Earth is duration during which the target communications satellite and any reference point on the Earth completes one relative movement. In this way, relative locations of the target communications satellite and a same reference point on the Earth may be the same at a same moment in the period of relative movement between the target communications satellite and the Earth. For example, the duration of the relative movement period is 48 hours, the reference point is Mount Qomolangma, and time during which the target communications satellite flies around the Earth is 480 hours, that is, the target communications satellite completes flying in 10 relative movement periods. In this case, relative locations of the target communications satellite and Mount Qomolangma are the same at a same moment in each relative movement period, and the relative locations of the target communications satellite and Mount Qomolangma in each relative movement period have a same change.

Optionally, the duration of the relative movement period is a least common multiple of duration of a rotation period of the Earth and duration of a movement period of the target communications satellite. If a condition that the relative locations of the target communications satellite and Mount Qomolangma in each relative movement period have a same change needs to be met, a common multiple of the duration of the rotation period of the Earth and the duration of the movement period of the target communications satellite needs to be determined as the duration of the relative movement period. For ease of calculation by a skilled person, the least common multiple of the duration of the rotation period of the Earth and the duration of the movement period of the target communications satellite may be determined as the duration of the relative movement period.

The time period of effective communication between the gateway station and the target communications satellite in the relative movement period is a time period in which the gateway station falls within signal coverage of the target communications satellite and can establish a connection to the target communications satellite, and data transmission is maintained at a normal speed. A computing person may calculate, based on the location information of the gateway station and the flying locations corresponding to the target communications satellite at different moments, the effective communication time period corresponding to each gateway station. A calculation manner is as follows: A time period in which each gateway station is visible to the target communications satellite in the period of relative movement between the target communications satellite and the Earth is determined based on the ephemeris information of the target communications satellite and the location information of the plurality of gateway stations. The effective communication time period corresponding to each gateway station is determined based on the visible time period corresponding to the gateway station, where duration of the effective communication time period corresponding to each gateway station is shorter than duration of the visible time period.

The time period in which the gateway station is visible to the target communications satellite in the period of relative movement between the target communications satellite and the Earth is a time period in which the gateway station falls within the signal coverage of the target communications satellite. A skilled person may first calculate, based on the location information of the gateway station, the flying locations corresponding to the target communications satellite at different moments, and the signal coverage of the target communications satellite, at least one time period that is in one relative movement period and in which the gateway station falls within the signal coverage of the target communications satellite, where the at least one time period is the time period in which the gateway station is visible to the target communications satellite. Generally, due to impact of factors such as weather and a geographical location, in a start time segment and an end time segment of the time period in which the gateway station is visible to the target communications satellite, the gateway station may be unable to establish a connection to the target communications satellite or ensure normal data transmission. Therefore, a time period in which a gateway station is visible to the target communications satellite is unnecessarily a time period of effective communication between the gateway station and the target communications satellite. Duration of the time period of effective communication between the gateway station and the target communications satellite is usually shorter than duration of the corresponding visible time period. The skilled person may set duration of the start time segment and duration of the end time segment, and subtract the specified duration of the start time segment and the specified duration of the end time segment from the time period in which the gateway station is visible to the target communications satellite, to obtain to the corresponding effective communication time period. The duration of the start time segment and the duration of the end time segment may be set by the skilled person based on experience. Herein, the duration of the start time segment and the duration of the end time segment are not limited. For example, a time period in which a gateway station A is visible to the target communications satellite is 30 min to 40 min, and the duration of the start time segment and the duration of the end time segment that are set by the skilled person are respectively 2 min and 3 min. In this case, a time period of effective communication between the gateway station A and the target communications satellite is 32 min to 37 min.

Step 303: Determine some target gateway stations from the plurality of gateway stations based on the effective communication time periods of the plurality of gateway stations and the relative movement period.

A union time period of the effective communication time periods of the target gateway stations can cover the entire relative movement period.

In implementation, after the effective communication time periods of the gateway stations in the satellite communications network and the period of relative movement between the target communications satellite and the Earth are obtained, some gateway stations, namely, the target gateway stations, that establish a connection to the gNB may be determined from the gateway stations.

In one feasible manner, a skilled person may sort start time points of the effective communication time periods of the gateway stations, and determine the target gateway station based on a sequence of the start time points of the effective communication time periods of the gateway stations and duration of the effective communication time periods of the gateway stations.

In implementation, if start time points of effective communication time periods of a plurality of gateway stations are the same, sorting locations of the corresponding gateway stations may be the same. A skilled person determines at least one start gateway station based on the sequence of the start time points of the effective communication time periods of the gateway stations. A start time point of the start gateway station may be a start time point of the relative movement period, or may be located before the start time point of the relative movement period, that is, the start time point of the start gateway station may be in a previous relative movement period of the relative movement period. An end time point falls within the relative movement period. When there are a plurality of start gateway stations, a corresponding gateway station with a later end time point is determined as the first target gateway station. After the first target gateway station is determined, a gateway station whose start time point is the same as an end time point of the first target gateway station or a gateway station whose start time point falls within an effective communication time period of the first target gateway station may be determined as a first intermediate gateway station. If there is only one first intermediate gateway station, the first intermediate gateway station is the second target gateway station; or if there are a plurality of first intermediate gateway stations, a corresponding first intermediate gateway station with a later end time point is determined as the second target gateway station. After the second target gateway station is determined, a gateway station whose start time point is the same as an end time point of the second target gateway station or a gateway station whose start time point falls within an effective communication time period of the second target gateway station may be determined as a second intermediate gateway station. If there is only one second intermediate gateway station, the second intermediate gateway station is the third target gateway station; or if there are a plurality of second intermediate gateway stations, a corresponding second intermediate gateway station with a later end time point is determined as the third target gateway station. Then, by analogy, a subsequent gateway station is determined. When an end time point of the N^{th} target gateway station is the end time point of the relative movement period, or the end time point of the N^{th} target gateway station is located in the effective communication time period of the first target gateway station, the N^{th} target gateway station is determined as the last target gateway station.

In another feasible manner, a skilled person may determine a plurality of connection time periods obtained through division in the relative movement period, and determine some target gateway stations from the plurality of gateway station based on the plurality of connection time periods, the effective communication time periods of the plurality of gateway stations, and the relative movement period. Corresponding processing is as follows: A connection time period corresponding to each gateway station is determined based on the plurality of connection time periods and the effective communication time periods of the plurality of gateway stations, where the connection time period corresponding to each gateway station falls within a range of a corresponding effective communication time period. A directed graph is established by using the connection time period corresponding to each gateway station as a vertex, where in the directed graph, if connection time periods corresponding to any two first vertices are adjacent to each other in time and correspond to a same gateway station, a weight of an edge between the two first vertices is a first value; and if connection time periods corresponding to any two second vertices are adjacent to each other in time and correspond to different gateway stations, a weight of an edge between the two second vertices is a second value, where the first value is less than the second value. A shortest path is determined in the directed graph based on a shortest path algorithm. A target gateway station corresponding to a vertex on the shortest path is determined.

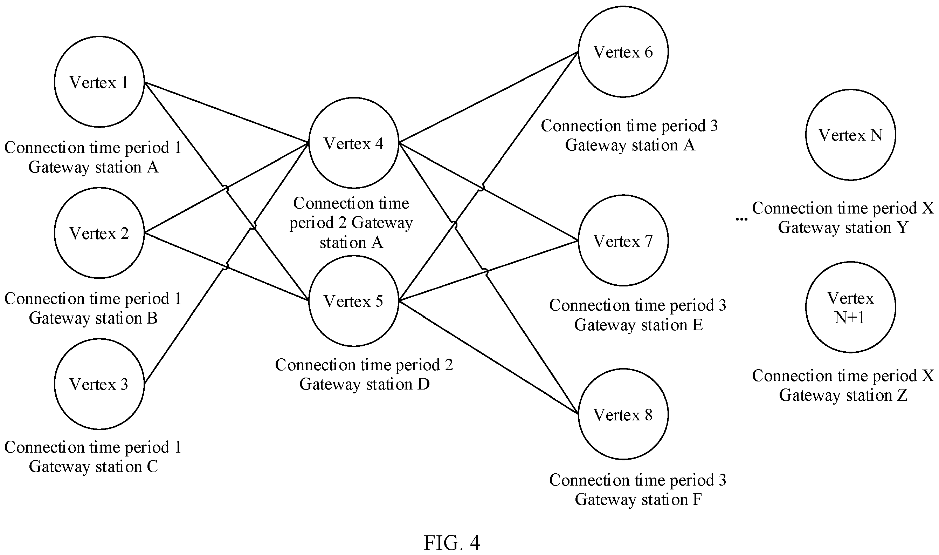

In implementation, a skilled person may divide the relative movement period into a plurality of connection time periods. For example, if the relative movement period is 48 hours, and the connection time period is 10 minutes, the relative movement period corresponds to 288 connection time periods. Duration of the connection time periods may be equal or unequal. In this embodiment of this application, the solution is described in detail by using that the duration of the connection time periods may be equal. A processing manner for a case in which the duration of the connection time periods is unequal is similar to that for the case in which the duration of the connection time periods is equal, and details are not described herein again. In each connection time period, the target communications satellite establishes a connection to only a corresponding gateway station, and time for switching a feeder link between the target communications satellite and a plurality of gateway stations is an end time point of the connection time period. After the plurality of connection time periods obtained through division in the relative movement period are determined, a connection time period corresponding to each gateway station may be determined. The connection time period corresponding to each gateway station falls within a range of a corresponding effective communication time period, that is, duration of the effective communication time period of each gateway station is longer than the corresponding connection time period, and a start time point and an end time period of the connection time period corresponding to the gateway station fall within the effective communication time period corresponding to the gateway station. One gateway station may have a plurality of effective communication time periods, and may also correspond to a plurality of connection time periods in each effective communication time period. For example, the relative movement period is 48 hours, that is, a time period of the relative movement period is 00:00:00-47:59:59, and the connection time periods are respectively 00:00:00-00:09:59, 00:10:00-00:19:59, ..., and 47:50:00-47:59:59. If effective communication time of a gateway station B is 00:25:00-02:54:00, connection time periods corresponding to the gateway station B are 00:30:00-00:39:59 and 00:40:00-00:49:59. Then, a directed graph may be established by using the connection time period corresponding to each gateway station as a vertex, and the directed graph may be a directed graph with a weight. If connection time periods corresponding to two vertices are adjacent to each other, the two vertices are adjacent vertices, that is, an edge may exist between the two vertices. A weight of the edge may be determined by using gateway stations corresponding to the two vertices. When connection time periods corresponding to two vertices are adjacent to each other in time and correspond to a same gateway station, a weight of an edge between the two vertices is a first value; or if connection time periods corresponding to any two vertices are adjacent to each other in time and correspond to different gateway stations, a weight of an edge between the two vertices is a second value. The first value is less than the second value, for example, the first value may be a value approaching 0, and the second value may be 1. FIG. 4 is a directed graph with a weight constructed by using a connection time period as a vertex.

After the directed graph with a weight is constructed, a skilled person may specify a start vertex and an end vertex to obtain a shortest path from the specified start vertex to the specified end vertex based on a shortest path algorithm, for example, a Dijkstra algorithm (a type of shortest path algorithm). The specified start vertex may be the first connection time period in the relative movement period, and a start time point of the connection time period is the same as the start time point of the relative movement period. The specified end vertex may be the last connection time period in the relative movement period, and an end time point of the connection time period is the same as the end time point of the relative movement period. A gateway station corresponding to a connection time period corresponding to a vertex on the shortest path is a target gateway station that establishes a connection to a base station. In addition, the target communications satellite may simultaneously establish a connection to a plurality of gateway stations. In this case, the skilled person may determine a plurality of shortest paths in the established directed graph with a weight based on the shortest path algorithm. A quantity of shortest paths is the same as a quantity of gateway stations simultaneously connected to the target communications satellite, quantities of vertices on different shortest paths are the same, and vertices on different shortest paths correspond to different gateway stations.

Step 304: Indicate the target base station to establish a connection to each target gateway station.

In implementation, after some target gateway stations in the satellite communications network are determined, during establishment of the satellite communications network, the target base station may be indicated to establish a connection to the target gateway stations.

In the satellite communications network, the target communications satellite may need to establish a connection to different gateway stations in different connection time periods. In this case, a feeder link between the target communications satellite and a gateway station may be switched at an end time point or a start time point of each connection time period, that is, the target communications satellite is disconnected from a currently connected gateway station and establishes a connection to a next to-be-connected gateway station. Specific time is required in a process of switching a feeder link by the target communications satellite, and in the process of switching the feeder link by the target communications satellite, the target communications satellite does not establish a connection to the gateway station. Therefore, if UE that uses the satellite communications network transmits data in this case, data transmission is interrupted. Interruption includes interruption of downlink transmission, interruption of both uplink transmission and downlink transmission, and the like. To prevent data transmission of the UE from being interrupted due to feeder link switching performed by the target communications satellite, the target communications satellite may send interruption indication information to the UE in advance before switching the feeder link, to notify the UE of interruption time and an interruption type. Corresponding processing is as follows: A total connection time period corresponding to each target gateway station is determined based on the connection time period corresponding to the target gateway station. Time for switching a feeder link between a communications satellite and each target gateway station is determined based on the total connection time period corresponding to the target gateway station. The interruption indication information is determined based on time for switching a feeder link between the target communications satellite and each target gateway station and a connection manner between the target communications satellite and the target base station, where the interruption indication information includes an interruption type and an interruption time period, and the interruption indication information is sent by the target gateway station to a user terminal to indicate, to the user terminal, an interruption type and an interruption time period of signal interruption generated due to switching of the feeder link between the target communications satellite and the target gateway station.

In implementation, the total connection time period of each target gateway station may be determined based on the determined connection time period corresponding to the target gateway station in step 303. For example, if connection time periods corresponding to a gateway station C are 00:00:00-00:09:59 and 00: 10:00-00:19:59, a total connection time period corresponding to the gateway station C is 00:00:00-00:19:59. Then, the time for switching the feeder link between the target communications satellite and each target gateway station is determined based on the total connection time period corresponding to the target gateway station. For example, if the total connection time period corresponding to the gateway station C is 00:00:00-00:19:59, and a total connection time period corresponding to a gateway station D is 00:20:00-00:29:59, corresponding time at which the target communications satellite switches a feeder link is 00:19:59. Further, an interruption type may be determined based on the connection manner between the target communications satellite and the target base station. In the architecture of the satellite communications network provided in this embodiment of this application, a base station is located on the ground, and may be connected to the target communications satellite by using the gateway station. The target communications satellite is a transparent transmission satellite, that is, the target communications satellite is only responsible for forwarding data between the UE and the gateway station/gNB. When the target communications satellite switches a feeder link, the target communications satellite is disconnected from the gateway station, and the target communications satellite cannot complete data forwarding between the UE and the gateway station/gNB. A corresponding interruption type is interruption of both uplink transmission and downlink transmission. In another architecture of the satellite communications network, the base station is located on a satellite. Even when the target communications satellite switches a feeder link, the base station can still receive data sent by the UE but cannot receive data of the gateway station. In this case, a corresponding interruption type is that downlink transmission is interrupted but uplink transmission is not interrupted. After interruption time and an interruption type are obtained, corresponding interruption indication information may be generated, which is as follows:

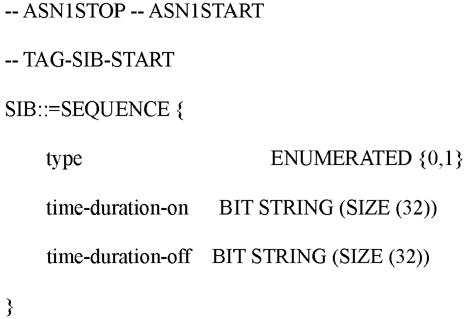

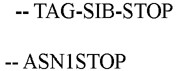

The foregoing type is a terminal type. When the type is 0, a corresponding interruption type is interruption of both uplink transmission and downlink transmission; or when the type is 1, a corresponding interruption type is that downlink transmission is interrupted but uplink transmission is not interrupted.

Time-duration-on is interruption start time.

Time-duration-off is interruption end time.

A skilled person may set the interruption end time based on the interruption start time, for example, the interruption start time 01:59:59:59, and the interruption end time is 02:00:00:20.

Some gateway stations are determined from the plurality of gateway stations in the satellite communications network. After the satellite communications network is established, because a quantity of gateway stations in the satellite communications network is reduced, a quantity of times of switching a feeder link between the target communications satellite and the gateway station is reduced, and a quantity of times of interruption is correspondingly reduced. Further, the interruption indication information is sent to the UE in advance, to prevent data transmission of the UE from being interrupted due to feeder link switching performed by the target communications satellite.

In this embodiment of the present invention, the location information of the plurality of gateway stations and the ephemeris information of the target communications satellite are obtained to determine the time period of effective communication between each gateway station and the target communications satellite. Then, the period of relative movement between the target communications satellite and the Earth is set, and the effective communication time period corresponding to each gateway station is predicted based on the relative movement period. Some target gateway stations are determined from the plurality of gateway stations in the satellite communications network. Finally, the gNB is indicated to establish a connection to the target gateway station. In this application, the gNB is indicated to establish a connection to some target gateway stations in a plurality of gateway stations, so that construction costs of the satellite communications network can be reduced while normal running of the satellite communications network is ensured.

All of the foregoing optional technical solutions may form optional embodiments of this disclosure through any combination. Details are not described herein again.

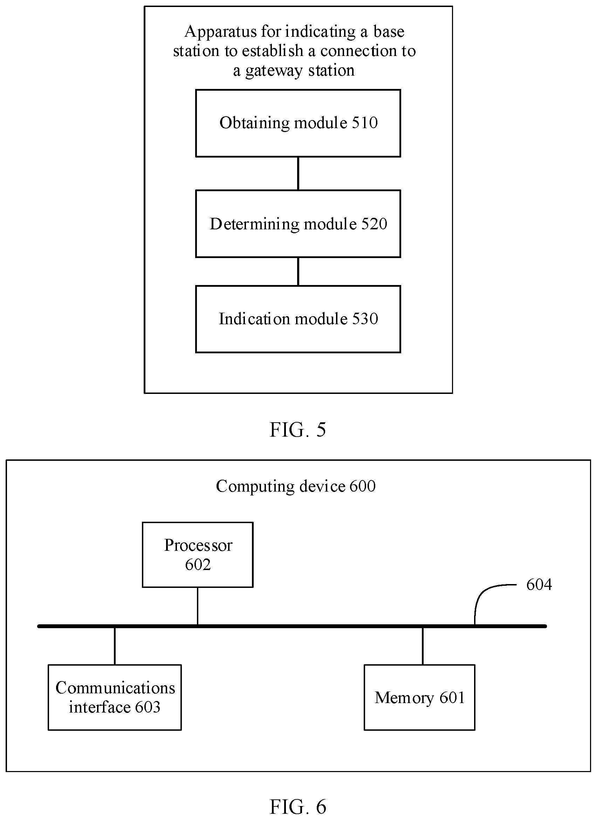

Based on the same technical concept, an embodiment of the present invention further provides an apparatus for indicating a base station to establish a connection to a gateway station. As shown in FIG. 5, the apparatus includes an obtaining module 510, a determining module 520, and an indication module 530.

The obtaining module 510 is configured to obtain ephemeris information of a target communications satellite corresponding to a target base station and location information of a plurality of gateway stations corresponding to the target communications satellite, and may specifically implement the obtaining function in step 301 and another implicit step.

The determining module 520 is configured to: determine, based on the ephemeris information of the target communications satellite and the location information of the plurality of gateway stations, a time period of effective communication between each gateway station and the target communications satellite in a period of relative movement between the target communications satellite and the Earth; and determine some target gateway stations from the plurality of gateway stations based on the effective communication time periods of the plurality of gateway stations and the relative movement period, where a union time period of the effective communication time periods of the target gateway stations can cover the entire relative movement period. The determining module 520 may specifically implement the determining functions in step 302 and step 303 and another implicit.

The indication module is configured to indicate the target base station to establish a connection to each target gateway station, and may specifically implement the indication function in step 304 and another implicit step.

Optionally, duration of the relative movement period is a least common multiple of duration of a rotation period of the Earth and duration of a movement period of the target communications satellite.

Optionally, the determining module 520 is configured to:
determine, based on the ephemeris information of the target communications satellite and the location information of the plurality of gateway stations, a time period in which each gateway station is visible to the target communications satellite in the period of relative movement between the target communications satellite and the Earth; and
determine, based on the visible time period corresponding to each gateway station, the effective communication time period corresponding to the gateway station, where duration of the effective communication time period corresponding to each gateway station is shorter than duration of the visible time period.

Optionally, the determining module 520 is configured to:
determine a plurality of connection time periods obtained through division in the relative movement period; and
determine some target gateway stations from the plurality of gateway stations based on the plurality of connection time periods, the effective communication time periods of the plurality of gateway stations, and the relative movement period.

Optionally, the determining module 520 is configured to:
determine, based on the plurality of connection time periods and the effective communication time periods of the plurality of gateway stations, a connection time period corresponding to each gateway station, where the connection time period corresponding to each gateway station falls within a range of a corresponding effective communication time period;
establish a directed graph by using the connection time period corresponding to each gateway station as a vertex, where in the directed graph, if connection time periods corresponding to any two first vertices are adjacent to each other in time and correspond to a same gateway station, a weight of an edge between the two first vertices is a first value; and if connection time periods corresponding to any two second vertices are adjacent to each other in time and correspond to different gateway stations, a weight of an edge between the two second vertices is a second value, where the first value is less than the second value;
determine a shortest path in the directed graph based on a shortest path algorithm; and
determine a target gateway station corresponding to a vertex on the shortest path.

Optionally, the indication module 530 is further configured to:
determine, based on the connection time period corresponding to each target gateway station, a total connection time period corresponding to the target gateway station;
determine, based on the total connection time period corresponding to each target gateway station, time for switching a feeder link between a communications satellite and the target gateway station; and
determine interruption indication information based on time for switching a feeder link between the target communications satellite and each target gateway station and a connection manner between the target communications satellite and the target base station, where the interruption indication information includes an interruption type and an interruption time period, and the interruption indication information is sent by the target gateway station to a user terminal to indicate, to the user terminal, an interruption type and an interruption time period of signal interruption generated due to switching of the feeder link between the target communications satellite and the target gateway station.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

If the integrated module is implemented in the form of a software functional module and sold or used as an independent product, the integrated unit may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium and includes several instructions for indicating a terminal device (which may be a personal computer, a mobile phone, or a network device) or a processor (processor) to perform all or a part of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

It should be noted that the obtaining module 510, the determining module 520, and the indication module 530 may be implemented by a processor, or may be implemented by a processor in cooperation with a memory and a transceiver.

When the apparatus for indicating a base station to establish a connection to a gateway station provided in the foregoing embodiment is used to indicate a base station to establish a connection to a gateway station, division of the foregoing functional modules is merely used as an example for description. In actual application, the foregoing functions may be allocated to different functional modules based on a requirement to be completed, to be specific, an internal structure of a device is divided into different functional modules to complete all or some of the functions described above. In addition, the apparatus for indicating a base station to establish a connection to a gateway station provided in the foregoing embodiment and the method embodiment for indicating a base station to establish a connection to a gateway station belong to a same concept. For a specific implementation process of the apparatus, refer to the method embodiment. Details are not described herein again.

An embodiment of this application further provides a computing device for indicating a base station to establish a connection to a gateway station. FIG. 6 provides an example diagram of a possible architecture of a computing device 600.

The computing device 600 includes a memory 601, a processor 602, a communications interface 603, and a bus 604. The memory 601, the processor 602, and the communications interface 603 implement a communication connection with each other by using the bus 604.

The memory 601 may be a ROM, a static storage device, a dynamic storage device, or a RAM. The memory 601 may store a program. When the program stored in the memory 601 is executed by the processor 602, the processor 602 and the communications interface 603 are configured to indicate a method for establishing a connection between a base station and a gateway station. The memory 601 may further store a data set. For example, some storage resources in the memory 601 are grouped as a data set storage module to store a data set required to indicate a base station to establish a connection to a gateway station.

The processor 602 may be a general-purpose central processing unit (Central Processing Unit, CPU), a microprocessor, an application specific integrated circuit (Application Specific Integrated Circuit, ASIC), a graphics processing unit (graphics processing unit, GPU), or one or more integrated circuits.

The processor 602 may alternatively be an integrated circuit chip and has a signal processing capability. In an implementation process, some or all of functions of the apparatus for indicating a base station to establish a connection to a gateway station in this application may be completed by using an integrated logic circuit of hardware in the processor 602 or instructions in a form of software. The foregoing processor 602 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 601. The processor 602 reads information in the memory 601, and completes, with reference to the hardware in the processor 602, some functions of the apparatus for indicating a base station to establish a connection to a gateway station in the embodiments of this application.

The communications interface 603 uses but unnecessarily uses a transceiver module such as a transceiver to implement communication between the computing device 600 and another device or a communications network. For example, the data set may be obtained by using the communications interface 603.

The bus 604 may include a path for transmitting information between components (for example, the memory 601, the processor 602, and the communications interface 603) of the computing device 600.

When there are a plurality of computer devices 600, a communications path is established between the computing devices 600 by using a communications network. Each computing device 600 runs any one or more of the foregoing obtaining module 510, determining module 520, and indication module 530. Any computing device 600 may be a computing device (for example, a server) in a cloud data center, a computing device in an edge data center, or a terminal computing device.

Descriptions of procedures corresponding to the foregoing accompanying drawings have respective focuses. For a part that is not described in detail in a procedure, refer to related descriptions of another procedure.

The foregoing embodiments may be completely or partially implemented by using software, hardware, firmware, or any combination thereof. When being implemented by using software, the foregoing embodiments may be completely or partially implemented in a form of a computer program product. The computer program product includes one or more computer instructions. When the computer program instructions are loaded and executed on a device, all or some of the procedures or functions according to the embodiments of the present invention are generated. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial optical cable, an optical fiber, or a digital subscriber line) or wireless (for example, infrared, radio, or microwave) manner. The computer-readable storage medium may be any usable medium accessible by a device, or a data storage device, such as a server or a data center, integrating one or more usable media. The usable medium may be a magnetic medium (such as a floppy disk, a hard disk, and a magnetic tape), or may be an optical medium (such as a digital video disk (Digital Video Disk, DVD)) or a semiconductor medium (such as a solid-state disk).

A person of ordinary skill in the art may understand that all or some of the steps of the foregoing embodiments may be implemented by hardware or a program indicating related hardware. The program may be stored in a computer-readable storage medium. The storage medium may be a read-only memory, a magnetic disk, a compact disc, or the like.

The foregoing descriptions are merely one embodiment of the present invention, but are not intended to limit this application. Any modification, equivalent replacement, or improvement made without departing from the spirit and principle of this application should fall within the protection scope of this application.

## Claims

1. A method for indicating a base station to establish a connection to a gateway station, wherein the method comprises:
obtaining ephemeris information of a target communications satellite corresponding to a target base station and location information of a plurality of gateway stations corresponding to the target communications satellite;
determining, based on the ephemeris information of the target communications satellite and the location information of the plurality of gateway stations, a time period of effective communication between each gateway station and the target communications satellite in a period of relative movement between the target communications satellite and the Earth;
determining some target gateway stations from the plurality of gateway stations based on the effective communication time periods of the plurality of gateway stations and the relative movement period, wherein a union of the effective communication time periods of the target gateway stations can cover the entire relative movement period; and
indicating the target base station to establish a connection to each target gateway station.

2. The method according to claim 1, wherein duration of the relative movement period is a least common multiple of duration of a rotation period of the Earth and duration of a movement period of the target communications satellite.

3. The method according to claim 1, wherein the determining, based on the ephemeris information of the target communications satellite and the location information of the plurality of gateway stations, a time period of effective communication between each gateway station and the target communications satellite in a period of relative movement between the target communications satellite and the Earth comprises:
determining, based on the ephemeris information of the target communications satellite and the location information of the plurality of gateway stations, a time period in which each gateway station is visible to the target communications satellite in the period of relative movement between the target communications satellite and the Earth; and
determining, based on the visible time period corresponding to each gateway station, the effective communication time period corresponding to the gateway station, wherein duration of the effective communication time period corresponding to each gateway station is shorter than duration of the visible time period.

4. The method according to claim 1, wherein the determining some target gateway stations from the plurality of gateway stations based on the effective communication time periods of the plurality of gateway stations and the relative movement period comprises:
determining a plurality of connection time periods obtained through division in the relative movement period; and
determining some target gateway stations from the plurality of gateway stations based on the plurality of connection time periods, the effective communication time periods of the plurality of gateway stations, and the relative movement periods.

5. The method according to claim 4, wherein the determining some target gateway stations from the plurality of gateway stations based on the plurality of connection time periods, the effective communication time periods of the plurality of gateway stations, and the relative movement periods comprises:
determining, based on the plurality of connection time periods and the effective communication time periods of the plurality of gateway stations, a connection time period corresponding to each gateway station, wherein the connection time period corresponding to each gateway station falls within a range of a corresponding effective communication time period;
establishing a directed graph by using the connection time period corresponding to each gateway station as a vertex, wherein in the directed graph, if connection time periods corresponding to any two first vertices are adjacent to each other in time and correspond to a same gateway station, a weight of an edge between the two first vertices is a first value; and if connection time periods corresponding to any two second vertices are adjacent to each other in time and correspond to different gateway stations, a weight of an edge between the two second vertices is a second value, wherein the first value is less than the second value;
determining a shortest path in the directed graph based on a shortest path algorithm; and
determining a target gateway station corresponding to a vertex on the shortest path.

6. The method according to claim 5, wherein the method further comprises:
determining, based on the connection time period corresponding to the target gateway station, a total connection time period corresponding to each target gateway station;
determining, based on the total connection time period corresponding to the target gateway station, time for switching a feeder link between a communications satellite and each target gateway station; and
determining interruption indication information based on time for switching a feeder link between the target communications satellite and each target gateway station and a connection manner between the target communications satellite and the target base station, wherein the interruption indication information comprises an interruption type and an interruption time period, and the interruption indication information is sent by the target gateway station to a user terminal to indicate, to the user terminal, an interruption type and an interruption time period of signal interruption generated due to switching of the feeder link between the target communications satellite and the target gateway station.

7. An apparatus for indicating a base station to establish a connection to a gateway station, wherein the apparatus comprises:
an obtaining module, configured to obtain ephemeris information of a target communications satellite corresponding to a target base station and location information of a plurality of gateway stations corresponding to the target communications satellite;
a determining module, configured to: determine, based on the ephemeris information of the target communications satellite and the location information of the plurality of gateway stations, a time period of effective communication between each gateway station and the target communications satellite in a period of relative movement between the target communications satellite and the Earth; and determine some target gateway stations from the plurality of gateway stations based on the effective communication time periods of the plurality of gateway stations and the relative movement period, wherein a union time period of the effective communication time periods of the target gateway stations can cover the entire relative movement period; and
an indication module, configured to indicate the target base station to establish a connection to each target gateway station.

8. The apparatus according to claim 7, wherein duration of the relative movement period is a least common multiple of duration of a rotation period of the Earth and duration of a movement period of the target communications satellite.

9. The apparatus according to claim 7, wherein the determining module is configured to:
determine, based on the ephemeris information of the target communications satellite and the location information of the plurality of gateway stations, a time period in which each gateway station is visible to the target communications satellite in the period of relative movement between the target communications satellite and the Earth; and
determine, based on the visible time period corresponding to each gateway station, the effective communication time period corresponding to the gateway station, wherein duration of the effective communication time period corresponding to each gateway station is shorter than duration of the visible time period.

10. The apparatus according to claim 7, wherein the determining module is configured to:
determine a plurality of connection time periods obtained through division in the relative movement period; and
determine some target gateway stations from the plurality of gateway stations based on the plurality of connection time periods, the effective communication time periods of the plurality of gateway stations, and the relative movement periods.

11. The apparatus according to claim 10, wherein the determining module is configured to:
determine, based on the plurality of connection time periods and the effective communication time periods of the plurality of gateway stations, a connection time period corresponding to each gateway station, wherein the connection time period corresponding to each gateway station falls within a range of a corresponding effective communication time period;
establish a directed graph by using the connection time period corresponding to each gateway station as a vertex, wherein in the directed graph, if connection time periods corresponding to any two first vertices are adjacent to each other in time and correspond to a same gateway station, a weight of an edge between the two first vertices is a first value; and if connection time periods corresponding to any two second vertices are adjacent to each other in time and correspond to different gateway stations, a weight of an edge between the two second vertices is a second value, wherein the first value is less than the second value;
determine a shortest path in the directed graph based on a shortest path algorithm; and
determine a target gateway station corresponding to a vertex on the shortest path.

12. The apparatus according to claim 11, wherein the indication module is further configured to:
determine, based on the connection time period corresponding to the target gateway station, a total connection time period corresponding to each target gateway station;
determine, based on the total connection time period corresponding to the target gateway station, time for switching a feeder link between a communications satellite and each target gateway station; and
determine interruption indication information based on time for switching a feeder link between the target communications satellite and each target gateway station and a connection manner between the target communications satellite and the target base station, wherein the interruption indication information comprises an interruption type and an interruption time period, and the interruption indication information is sent by the target gateway station to a user terminal to indicate, to the user terminal, an interruption type and an interruption time period of signal interruption generated due to switching of the feeder link between the target communications satellite and the target gateway station.

13. The apparatus according to any one of claims 7 to 12, wherein the apparatus is any one of the following: a chip, a server, a computing device in an edge data center, and a terminal computing device.

14. A computing device for indicating a base station to establish a connection to a gateway station, wherein the computing device comprises a processor and a memory;
the memory stores computer instructions; and
the processor executes the computer instructions to implement the method according to any one of claims 1 to 6.

15. A computer-readable storage medium, wherein the computer-readable storage medium stores computer instructions, and when the computer instructions in the computer-readable storage medium are executed by a computing device, the computing device is enabled to perform the method according to any one of claims 1 to 6, or the computing device is enabled to implement a function of the apparatus according to any one of claims 7 to 12.

16. A computer program product, wherein the computer program product comprises computer instructions, and when the computer instructions are executed by a computing device, the computing device is enabled to perform the method according to any one of claims 1 to 6, or the computing device is enabled to implement a function of the apparatus according to any one of claims 7 to 12.
